# EUROPEAN PATENT APPLICATION

(11) **EP 1 768 283 A1**
(43) Date of publication of application: **28.03.2007**
(21) Application number: 05729026.4
(22) Date of filing: 17.03.2005
(51) Int. Cl.: H04B 10/20

(54) **METHOD FOR ANALYZING THE ALARM RELATIVITY IN AN OPTICAL SYNCHRONOUS TRANSMISSION NETWORK**

(30) Priority: 22.06.2004 CN 200410049953
(71) Applicant: ZTE Corporation, 518057 Shenzhen, Guangdong (CN)
(72) Inventor: XU, Zehua, ZTE Plaza, Keji Road South, Shenzhen, Guangdong 518057 (CN)
(74) Representative: Cabinet Plasseraud
(86) International application number: PCT/CN2005/000329
(87) International publication number: WO 2005/125062

(57) **Abstract**

The present invention discloses a method for analyzing mutual relation of alarms in a synchronous optical transmission network. The method analyzes the mutual relation of alarms between every two nodes according to propagation of alarms along a path from an upstream node to a downstream node; and analyzes mutual relation of alarms between a service layer path node and a client layer path node according to influence of AIS (Alarm Indication Signal) and SSF (Server Signal Fail) on a client layer. The method according to the present invention is capable of analyzing not only kinds of alarm information, but also the influence from an upstream alarm to a downstream alarm, and the situation of one alarm caused by multiple failures, therefore advantageously overcomes deficiencies of prior arts and improves efficiency and accuracy of the analysis.

## Description

### FIELD OF THE INVENTION

The present invention relates to optical transmission network, and more particularly, to a method for locating network failures in a synchronous optical transmission network.

### DESCRIPTION OF THE BACKGROUND ART

With the popularization of internet, the increasing demand for network transmission, both in capability and quality, accelerates the advancement of the information technology. In the network transmission system, the optical network plays a more and more important role. The judgment and settlement of network failures in the optical network system is an important part to ensure the optical network system transmission quality. Currently, when locating network failures in a synchronous optical transmission network, maintenance men manually checks the information, such as the alarm type, location and so on, which is reported by network elements to network administration unit, finds the root of the alarm in accordance with network information, such as network topology, traffic configuration and so on, and then adopts corresponding methods to solve the problems. When there are pluralities of network elements and the traffic configuration is complicated, a root alarm will result in a lot of alarm information propagated from the root alarm. In this situation, if the network failure is located manually, the speed is slow and the demand for maintenance men is high, which requires he/she not only know much knowledge about relevant network information but also has abundant failure administration experience. Therefore, the demand for high speed locating and administrating network failures in a synchronous optical transmission network is very hard to be satisfied.

Another related method for automatically analyzing alarms in a synchronous optical transmission network is disclosed in the CN patent No.CN1244750, titled with "Alarm eliminating method for optical transmission apparatus", published on Feb. 16th, 2000. This patent application disclosed a method which needs to check every alarms one by one through following processes: firstly, identifying whether an alarm is a root alarm or not, and eliminate a first propagation alarm, i.e. MS-RDI (MS denotes Multiplex Section, and RDI denotes Remote Defect Indication) generated by the root alarm when the alarm is identified as a root alarm; secondly, identifying the types of the network elements, and eliminate second propagation alarms, such as VC-3-RDI (VC-3 denotes Virtual Container, level 3; RDI denotes Remote Defect Indication) and VC-12-RDI (VC-12 denotes Virtual Container, level 12; RDI denotes Remote Defect Indication) generated by the root alarm according to the identified types of the network elements; finally, eliminating third propagation alarms such as TU-3-AIS (TU-3 denotes Tributary Unit, level 3; AIS denotes Alarm Indication Signal) and TU-12-AIS (Tributary Unit, level 12; AIS denotes Alarm Indication Signal) generated according to the second propagation alarm. However, the method of the patent application still can not satisfy the present demand of analysis of alarms effectively: the method can only analyze some kinds of alarms, and can not analyze the influence of an upstream alarm on a downstream alarm of the same type by traffic configuration information, and also can not analyze the situation of one alarm caused by multiple failures. When analyzing an alarm, this method has to check all propagation alarms of this alarm in all the alarm lists, and the analyzing speed can not satisfy the demand of high speed failure locating, specially when the quantity of alarms and network elements is large and the traffic configuration is complicated.

### SUMMARY OF THE INVENTION

The present invention aims to provide a method for analyzing mutual relation of alarms in a synchronous optical transmission network. The inventive method is capable of analyzing not only all kinds of alarm information, but also the influence of an upstream alarm on a downstream alarm, and the situation of one alarm caused by multiple failures, therefore overcomes deficiencies of the prior arts and improves the efficiency and accuracy of analyzing.

To achieve the above object, the present invention provides a method for analyzing mutual relation of alarms in a synchronous optical transmission network, wherein the method includes the following steps:
- step 1: initializing the root alarm information for all the path nodes;
- step 2: identifying whether near end alarms are root alarms or not, and determining whether all the near end alarms have been identified as the root alarms, if yes, go to step 6; else if not, go to the next step;
- step 3: analyzing all alarms of a transmission medium layer in order to determine whether all the near end alarms have been identified as the root alarms or not, and after the analysis, go to step 6 when all the near end alarms have been determined completely;
- step 4: analyzing all alarms of a high-order path layer in order to determine whether all near end alarms have been identified as the root alarms or not, and after the analysis, go to step 6 when all the near end alarms have been determined completely;
- step 5: analyzing all alarms of a low-order path layer; and
- step 6: identifying the root of all alarms.

According to the method of the present invention, the step 1 of initializing includes a step of assigning each path node a root alarm information list and initializing the information as null which means no root alarm.

According to the method of the present invention, the step 3 further comprises steps of:
- step 31: analyzing the propagation relation of all the transmission medium layer alarms in the transmission medium layer paths, and identifying the root alarms according to the principle that a downstream alarm is derived from an upstream alarm; and
- step 32: eliminating all the high-order and low-order path layer path node alarms that are derived from the transmission medium layer alarms.

According to the method of the present invention, the step 31 further comprises steps of:
- step 311: checking each one of transmission medium layer alarms, whether an alarm can be derived from the path node root alarm in the detecting location, and if yes, said alarm is identified to be not a root alarm and a next transmission medium layer alarm will be analyzed directly; or else if not, said alarm is identified to be a root alarm, and then go to next step;
- step 312: adding said alarm to the root alarm lists of all the downstream nodes behind the path node at the detecting location according to the transmission medium layer path information;
- step 313: analyzing the influence of said alarm on the high-order and low-order path layer path nodes, and adding said alarm to the root alarm lists of downstream nodes of all the high-order and low-order path layer path passing across the transmission medium layer path of said alarm; and
- step 314: processing all alarms by repeating the above steps circularly till all the transmission medium layer alarms having been processed completely.

According to the method of the present invention, in the step 32, for any one of all high-order or low-order path layer path node alarms, if an alarm can be derived from any root alarm in the root alarm information list of the path node in the detecting location, said alarm is marked as a non-root alarm.

According to the method of the present invention, the step 4 further comprises steps of:
- step 41: analyzing the propagation relation of the high-order path layer alarms in the high-order path layer path; and
- step 42: eliminating all the low-order path layer path node alarms that are derived from high-order path layer alarms.

According to the method of the present invention, the step 41 further comprises steps of:
- step 411: checking each one of all the high-order path layer alarms, whether an alarm can be derived from the path node root alarms at the detecting location, if yes, said alarm is identified to be not a root alarm and a next high-order path layer alarm will be analyzed directly; else if not, said alarm is identified to be a root alarm; and
- step 412: adding said alarm to the root alarm information lists of all the downstream nodes behind the path node at the detecting location according to the high-order path layer path information;
- step 413: analyzing the influence of said alarm on the low-order path layer path nodes, and adding the alarm to the root alarm information lists of downstream nodes of all the low-order path layer paths passing across the high-order path layer path of said alarm; and
- step 414: processing all alarms by repeating the above steps circularly till all the high-order path layer alarms having been processed completely.

According to the method of the present invention, in the step 42, for any one of all the low-order path layer path node alarms, if an alarm can be derived from the path node root alarm at the detecting location, said alarm is identified to be not a root alarm.

According to the method of the present invention, the step 5 further comprises steps of:
- step 51: checking each one of all the low-order path alarms, whether an alarm can be derived from the path node root alarm in the detecting location, if yes, said alarm is identified to be not a root alarm and the next low-order path layer alarm will be analyzed directly; or else if not, said alarm is determined a root alarm, and then go to next step; and
- step 52: adding said alarm to the root alarm information lists of all the downstream nodes behind the path node at the detecting location according to the low-order path layer path information.

According to the method of the present invention, the step 6 further comprises steps of:
- step 61: checking each one of all near end alarms based on the analyzing result from steps 1 to 5, whether a root alarm in the root alarm information list of the path node at the detecting location of a near end alarm is said near end alarm *per se,* if yes, the root of said near end alarm is said near end alarm *per se,* i.e., said near end alarm is identified to be a root alarm;
- step 62: determining whether said near end alarm can be derived from some root alarms in the root alarm list of the path nodes at the detecting location, if yes, the root alarm of said near end alarm is identified to be the root alarm of the path nodes; and
- step 63: determining whether said near end alarm can be derived from some root alarms in the root alarm list of the path nodes at the detecting location, if yes, the root alarm of said near end alarm is identified to be the root alarms of the path nodes.

The method provided by the present invention for analyzing mutual relation of alarms in a synchronous optical transmission network analyzes mutual relation of alarms between each two nodes according to the propagation relation of alarms along a path from an upstream node to a downstream node. The method analyzes mutual relation of alarms between a service layer path node and a client layer path node according to the influence of AIS and SSF on a client layer. In comparison with prior arts, the method of the present invention is capable of analyzing all kinds of alarm information, and the mutual relation between upstream nodes and downstream nodes of the same type correctly according to the propagation relation among the path nodes, and also the situation of one alarm caused by multiple failures. Moreover, the method of the present invention can save the analyzing time when the quantity of alarms and network elements is large and the traffic configuration is complicated, improve the efficiency and accuracy of analyzing, and so the customers can locate the network failures quickly and the quality of network service is improved.

### BRIEF DESCRIPTION OF THE DRAWINGS

FIG. 1 is a flow chart illustrating the method for analyzing mutual relation of alarms in a synchronous optical transmission network in accordance with the present invention;
FIG. 2 is a flow chart illustrating the analysis of the transmission medium layer in accordance with the present invention;
FIG. 3 is a flow chart illustrating the process of identifying alarm root in accordance with the present invention;
FIG. 4 is a schematic block diagram illustrating the analysis of a scenario with VC-4 (Virtual Container, level 4) channel protection in accordance with the present invention; and
FIG. 5 is a schematic block diagram illustrating the analysis of a scenario with multiplex section protection in accordance with the present invention.

### DETAILED DESCRIPTION OF THE PREFERRED EMBODIMENTS

An exemplary embodiment of the present invention will now be described in detail with reference to the drawings.

The method according to the present invention analyzes mutual relation of alarms based on layered principle of the layer network and transmission function of the path. So-called layer network is a kind of topology element being constructed of transmission entities and transmission processing functions, which describe generation, transmission and termination of special characteristic information. The synchronous optical transmission network is constructed by several independent layer networks in the vertical direction, that is, channel layer network and transmission medium layer network. The channel layer network comprises low-order path layer network and high-order path layer network. The transmission medium layer network comprises MS (Multiplex Section) layer network, RS (Regenerator Section) layer network and physical layer network. There is a relationship of client/server existing between the adjoined layers of networks. So-called path served as a transmission entity in the server layer network is limited by two access nodes at opposite ends of the path, and represents a link between the two path ends, being responsible for the transmission integrality for the feature information in one or more client layer networks between access nodes of the server layer.

The method of the present invention analyzes mutual relation of alarms between each two nodes according to the principle that a downstream alarm is derived from an upstream node along a path; and also analyzes the mutual relation of alarms between a server layer path node and a client layer path node according to the influence of AIS (Alarm Indication Signal) or SSF (Server Signal Fail) on a client layer.

The detailed principle is as follows:
1. The transmission medium layer path nodes propagate all alarms of MSn (Multiplex Section layer, level n, n=1, 4, 16, 64) path destination function to their downstream nodes. Communication errors such as LOS (Loss of Signal), LOF (Loss of Frame), MS-AIS and RS-TIM (TIM denotes Trace Identifier Mismatch) in transmission medium layer will all result in AU-AIS (AU denotes Administrative Unit) alarms detected at corresponding locations with the MSn and Sn adapted destination function.
2. The high-order path layer path nodes propagate AU-AIS alarms and all alarms of the Sn (higher order VC-n layer, n=3,4) path destination function to their downstream nodes. AU-AIS alarms and alarms of UNEQ (Unequipped), TIM (this is optional) in the high-order path layer will all result in TU-AIS (TU denotes Tributary Unit) alarms detected in the corresponding locations with the Sn and Sm adapted destination function.
3. The low-order path layer path nodes propagate TU-AIS alarms and all alarms of the Sm (lower order VC-m layer, m=11, 12, 2, 3) path destination function to their downstream nodes.

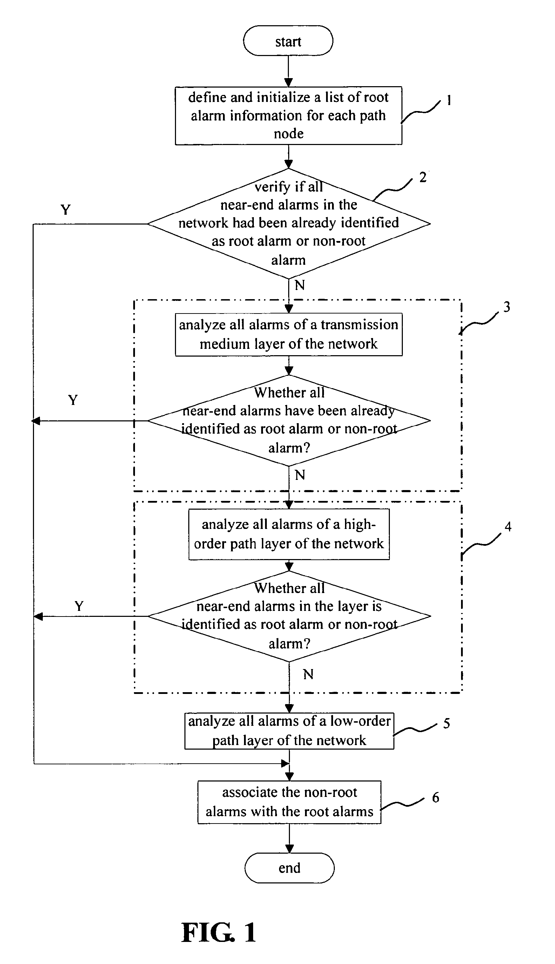

FIGS. 1, 2 and 3 show a flow chart illustrating the method of the present invention. As shown in FIGS. 1, the method includes following steps:
- step 1: initializing the root alarm information for all the path nodes, assigning each path node with a root alarm information list and initializing the information as null, which means no root alarm;
- step 2: determining whether all near end alarms, i.e. the alarms for receiving signals, have been identified as the root alarms or not, if yes, go to step 6; else if not, go to the next step;
- step 3: analyzing all alarms of the transmission medium layer in order to determine whether all the near end alarms have been identified as the root alarms, if yes, marking all the identified near end alarms and go to step 6, else if not, go to the next step;
- step 4: analyzing all alarms of the high-order path layer in order to determine whether all the near end alarms have been identified as the root alarms, if yes, marking all the identified near end alarms and go to step 6, else if not, go to the next step;
- step 5: analyzing alarms of the low-order path layer, and
- step 6: identifying the root of all alarms.

In the step 3, analyzing the transmission medium layer alarms is to analyze the propagation relation of the transmission medium layer alarms in the transmission medium layer path, and identify the root alarms according to the principle that a downstream alarm is derived from an upstream alarm; and then analyze the influence of the path node root alarms in the transmission medium layer on the path nodes in high-order path layer and low-order path layer, thereby finding out all path node alarms of the high-order path layer and low-order path layer that are derived from the path node root alarms of the transmission medium layer.

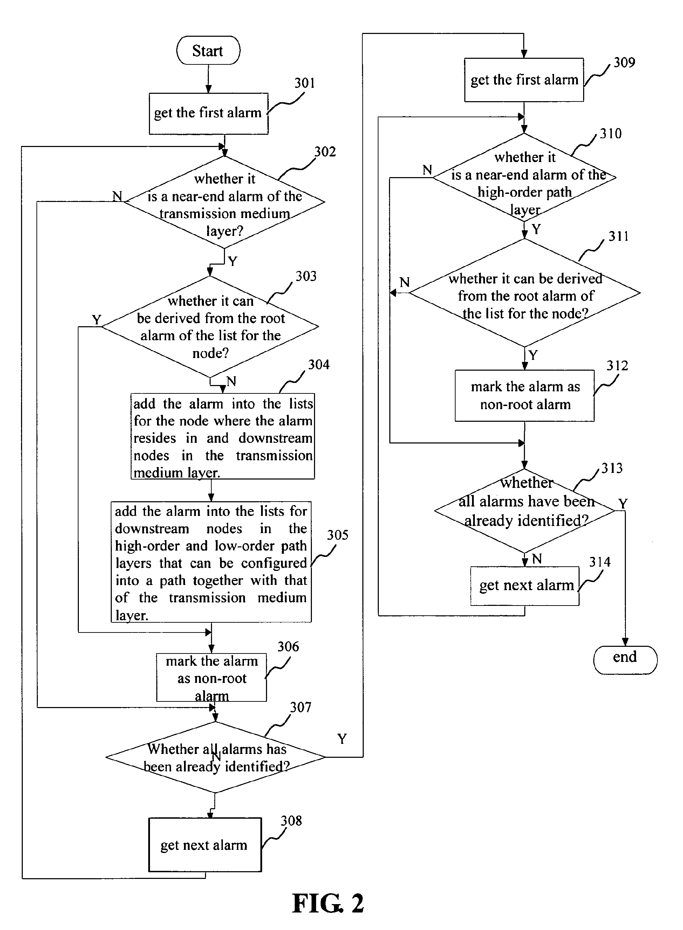

As shown in FIGS. 2, step 3 further comprises the following steps:
- step 301: taking a first alarm;
- step 302: checking whether said alarm is a near end alarm of transmission medium layer or not, if so, going to the next step; if not, going to step 307;
- step 303: checking whether said alarm can be derived from alarms in a root alarm information list of the path node of said alarm, if not, going to next step, else if so, going to step 306;
- step 304: adding said alarm to the root alarm information lists of said path node and downstream nodes of said path node;
- step 305: adding said alarm to root alarm information lists of the downstream nodes in the high-order path layer and low-order path layer paths passing through the transmission medium layer path where said path node resides in;
- step 306: marking said alarm as a non-root alarm;
- step 307: determining whether all alarms have been processed completely, if so, going to step 309; if not, going back to the step 301 for processing next alarm;
- step 308: checking next alarm and going back to step 302;
- step 309: checking a first alarm;
- step 310: checking if said alarm is a near end alarm of the high-order path layer or low-order path layer, if so, going to the next step; if not, going to step 313;
- step 311: checking whether said alarm can be derived from an alarm in the root alarm information list of the path node of said alarm, if so, going to next step; if not, going to step 313;
- step 312: marking said alarm as a non-root alarm;
- step 313: determining whether all alarms have been processed completely, if so, terminating the processing; if not, going to the next step;
- step 314: taking next alarm and going back to step 310.

In step 4, analyzing the high-order path alarms is to analyze the propagation relation of the high-order path layer alarms in the high-order path layer path, and identify the root alarms according to the principle that a downstream alarm is derived from an upstream alarm; then analyze the influence of the root alarms of the high-order path layer path nodes on the low-order path layer path nodes, thereby finding out all the low-order path layer path node alarms that are derived from high-order path layer path node root alarms.

The step 4 further comprises the following steps:
1. Analyzing the propagation relation of the high-order path layer alarms in the high-order path layer path, that is, the influence of the upstream path nodes alarms on the downstream path node alarms and the influence of the high-order path layer alarms on the low-order path layer path, where for any one of all high-order layer alarms, if it can be derived from a path node root alarm at the detecting location, said alarm is a non-root alarm, and next high-order path layer alarm will be analyzed directly, otherwise, said alarm is identified as a root alarm; if an alarm being a root alarm, adding the root alarm to the root alarm information lists of all the downstream nodes behind the path node at the detecting location according to the high-order path layer path information; and then analyzing the influence of the root alarm on the low-order path layer path nodes, and adding the root alarm to the root alarm information lists of the downstream nodes in all the low-order path layer paths passing through the high-order path layer path where the root alarm resides in, in this way all the alarms being processed by repeating above steps by order, till all the high-order path layer alarms having been processed completely;
2. Eliminating all the low-order path layer path node alarms that are derived from high-order path layer alarms, where for any one of low-order path layer path node alarms, if it can be derived from the root alarm of the path node at the detecting location, said alarm is identified as a non-root alarm.

The step 5 of analyzing the low-order path layer alarm is to analyze the propagation relation of the low-order path layer alarms in the low-order path layer path and searching the root alarms according to the principle that a downstream alarm is derived from an upstream alarm.

For any one of low-order layer alarms, if an alarm can be derived from root alarm of the path node at the detecting location, the alarm is a non-root alarm, and next low-order path layer alarm will be analyzed directly, otherwise, the alarm is a root alarm. If the alarm is a root alarm, it will be added to the root alarm information lists of all the downstream nodes behind the path node at the detecting location in accordance with the low-order path layer path information.

The step 6 of associating all alarms with their root alarms has been processed according to the analyzing results of the above steps. For any one of the near end alarms, if a root alarm in the root alarm information list of the path node at the detecting location of a near end alarm is the near end alarm *per se,* the root alarm of the near end alarm is the near end alarm *per se,* that is, the near end alarm is identified as a root alarm; if the near end alarm can be derived from some root alarm in the root alarm list of the path node at the detecting location, the root alarm of the path node will be identified to be the root alarm of the near end alarm. Finally connect the roots of the root alarm and the non-root alarm in order to set up the mutual relation of the near-end alarms.

RDI alarm is an alarm being fed back to a path source end from a path destination end when a fault is detected at the destination end. Therefore, the root alarm of an RDI alarm at the path source end is caused by the fault at the path destination end, i.e. they share a common root alarm. All alarms that can cause the RDI alarms can be found in the root alarm information list of the path destination end, as these alarms are the root alarms of the RDI alarm.

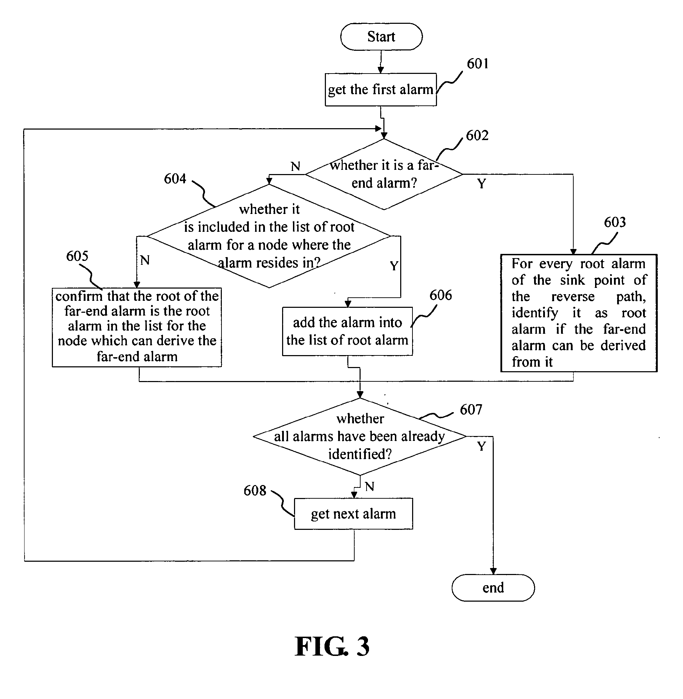

As shown in FIG. 3, the step 6 further comprises the following steps:
- step 601: taking a first alarm;
- step 602: checking if said alarm is a remote end alarm, if so, going to step 603; if not, going to step 604;
- step 603: setting all alarms in the root alarm information list of source end of the path where said alarm resides in, from which said alarm can be derived, to be the root alarms of said alarm, then going to step 607;
- step 604: determining whether the root alarm information list of the path node where said alarm resides in includes said alarm, if so, go to step 605; if not, go to step 606;
- step 605: setting the root alarm, from which said alarm can be derived, to be the root alarms of said alarm in the root alarm list of the path node where said alarm resides in, then going to step 607;
- step 606: adding said alarm to the root alarm list, and then going to step 607;
- step 607: determining whether all alarms have been processed completely, if so, terminating the processing; if not, go to step 608;
- step 608: checking next alarm and going back to step 602.

In the following embodiment, for the sake of conciseness, letters for the network elements are used to represent the path nodes in the transmission medium layer, the high-order path layer and the low-order path layer, without designating particular optical ports, AU and TU.

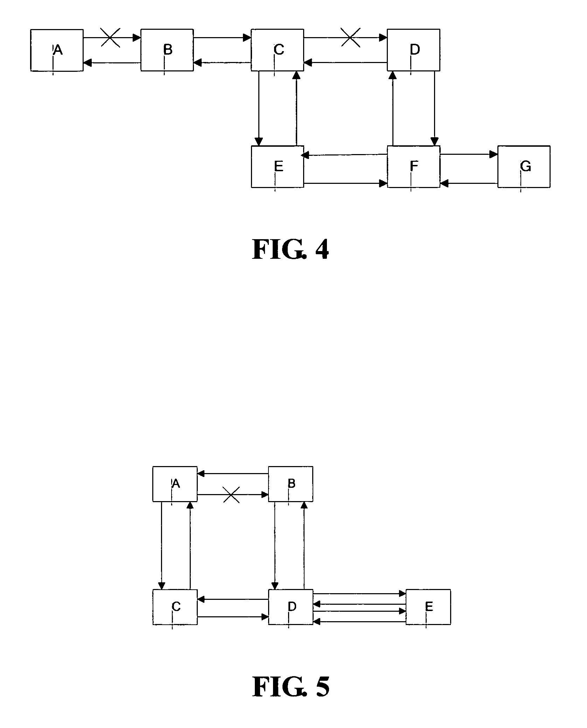

FIG. 4 illustrates a scenario with the VC-4 channel protection: network elements A, C, D, E, F and G are ADM (Add-Drop Multiplexer), and network element B is REG (Regenerator). C-D-F is a working path for VC-4 channel protection, and C-E-F is a protecting path for VC-4 channel protection. A, B and C compose a transmission medium layer path, and A, C, D (E), F and G compose a high-order path layer path. There are sixty three 2M services starting from A, being transmitted through the high-order path layer path, and arriving at G. As shown in FIG. 4, when a fiber from A to B breaks off, a LOS alarm is detected at B, meanwhile, a MS-AIS alarm is detected at C and a MS-RDI alarm is fed back to A. As the result, all of the D, E, F and G detect AU-4-AIS (AU4 denotes Administrative Unit, level 4) alarms, and then VC-4-RDI alarms are fed back to A; sixty three TU-1-AIS alarms are also detected at G and then sixty three VC-12-RDI alarms are fed back to A.

The analyzing steps are as follows: Firstly, the transmission medium layer alarms are analyzed. All the transmission medium layer alarms are checked by order. In case a LOS alarm of B is found out first, in the transmission medium layer path composed of A, B and C, the LOS alarm of B is identified as the root alarm information of the downstream node C, thus the LOS alarm of B is added to the root alarm information of C. Then the influence of the LOS alarm of B on the high-order path layer and low-order path layer is analyzed. Since the high-order path layer path composed by A, C, D (E), F and G passes through the transmission medium layer path composed by A, B and C, the LOS alarm of B is added to the root alarm information of downstream nodes D, E, F and G in the high-order path layer path. Similarly, the low-order path layer path composed by A and G passes across the high-order path layer path composed by A, C, D (E), F and G, so the LOS alarm of B is added to the root alarm information of downstream node G in the low-order path layer path. Afterwards, the analyzing continues with checking through the alarms in the transmission medium layer till the MS-AIS alarm of C. Since the MS-AIS alarm of C is derived from the LOS alarm of B in the root alarm information list of the path node in the transmission medium layer of C, so the MS-AIS alarm of C is identified as a non-root alarm. Till now, all the transmission medium layer alarms have been checked through completely.

Secondly, all the alarms derived from transmission medium layer alarms in the high-order and low-order path layer paths are eliminated. All alarms are checked through again, the root alarm information of transmission medium layer path node of the LOS alarm of B is the LOS alarm of B *per se,* so the LOS alarm of B is a root alarm. The MS-AIS alarm of C, the AU-4-AIS alarm of D, E, and F, the AU-4-AIS alarm and TU-12-AIS alarm of G all are derived from the LOS alarm of B in the root alarm information lists of their respective path nodes, so it is identified that the root alarm of the alarms of C, D, E, F and G is the LOS alarm of B. Till now, all the near end alarms have been identified, and there is no need to analyze the alarms in the high-order and low-order path layer.

Finally, the root alarm of all the alarms is determined. The root alarm of each near end alarm is determined first. The LOS alarm of B is a root alarm, and the MS-AIS alarm of C can be derived from the LOS alarm of B in the root alarm information of the path node where the MS-AIS of C resides in, so the root alarm of the MS-AIS alarm of C is the LOS alarm of B. Similarly, the root alarm of alarms of D, E, F and G is also the LOS alarm of B.

Afterwards, the root alarms of remote end alarms RDI are determined. MS-RDI alarm of B is derived from the LOS alarm of B in the root alarm information list of the path node in the transmission medium layer of C, and so the root alarm of MS-RDI alarm of B is the LOS alarm of B. The root alarm of VC-4 RDI alarm of A, C, D, E and F can be derived from the LOS alarm of B in the root alarm information list of the path node in the high-order path layer of G, and so their root alarm is the LOS alarm of B. The root alarm of the VC-12 RDI alarm of A can be derived from the LOS alarm of B in the root alarm information list of the path node in the low-order path layer of G, so their root alarm is the LOS alarm of B. Till now, all the alarm roots have been found out, and all of them are caused by the LOS alarm of C.

Another possibility is an MS-AIS alarm of C is found out first during the analyzing of transmission medium layer path, the MS-AIS alarm of C has been added to the root information list of C, D, E, F and G. When continuing check through till the LOS alarm of B, it can be found that the MS-AIS alarm of C is derived by the LOS alarm of B. So the MS-AIS alarm of C should be replaced by the LOS alarm of B in the root alarm information lists of C, D, E, F and G. The rest processing of analyzing is same as that of the previous analyzing.

Then, a condition that a non-root alarm has not been reported correctly should be considered. If the AU-4-AIS alarm of F has not been reported correctly, when analyzing LOS alarm of B, a root alarm information, i.e. the LOS alarm of B, will still be added to the path node in high-order path layer of G, and the analyzing result is same as that in the condition of AU-4-AIS alarm of F having been reported correctly. Therefore, the final analyzing result will not be affected if the non-root alarms have not been reported correctly.

In FIG. 4, if a fiber between C and D also breaks off, a LOS alarm but not an AU-4-AIS alarm is detected at D. When analyzing LOS alarm of D, the alarm can not be derived from the root alarm list of the path node in the transmission medium layer of D, so the alarm is a root alarm, and added to the root alarm list of D. The LOS alarm of D does not have a downstream node in the transmission medium layer path, so the influence of the LOS alarm of D on the high-order path layer path passing across D is analyzed directly. As F under the VC-4 channel protection, there is a need to check the status of the channel protection. If the channel protection of F selects the working channel, the LOS alarm of D should be added to the root alarm information list of the path node in the high-order path layer of F and G. Similarly, when analyzing the low-order path layer path, the LOS alarm of D should also be added into the root alarm information list of the path node in the low-order path layer of G. If the VC-4 channel protection of G selects the protection channel, the LOS alarm of D is not the root alarm information of F and G. Thus, if the channel protection of F selects the working channel, the alarms of F and G have two root alarms, that is, the LOS alarm of B and the LOS alarm of D. The rest processing of the analyzing is same as that of the previous analyzing, and therefore omitted for the sake of conciseness.

FIG. 5 illustrates another scenario with the MS protection: all the network elements are ADM, wherein a MS ring is composed of A, B, C and D, and D and E are linked through the MS chain. A high-order path layer path is composed of A, B D and E. There are sixty three 2M services starting from A, being transmit through that high-order path layer path, and then arriving at E. As shown in the FIG. 5, if a fiber between A and B breaks off, an LOS alarm can be detected at B, and an MS RDI alarm is fed back to A. At this time, if A and B do not operate MS ring bridge and switch, an AU-4-AIS alarm will be detected at D and an AU-4-AIS alarm and 63 TU-12-AIS alarms will be detected at E. If A and B have operated MS ring bridge and switch, no alarm will be detected at D and E. If A and B operate MS ring bridge and switch after the breaking off of the fiber between A and B, a VC-4-UNEQ alarm is detected at E because of other failures of D, a VC-4-RDI alarm is fed back to A, sixty three TU-12-AIS alarms will be detected at E, and sixty three VC-12-RDI alarms will be fed back to A, due to the influence of VC-4-UNEQ alarm on the path node in the low-order path layer.

The analyzing steps are as follows: Firstly, the transmission medium layer alarm is to be analyzed. All the transmission medium layer alarms are checked by order, and at that time there is only one near end alarm existing in the transmission medium layer, that is, the LOS alarm of B. Because the LOS alarm of B does not have the downstream nodes in the transmission medium layer, the influence of the LOS alarm of B on the high-order path layer paths passing through B can be analyzed directly. B has operated the ring bridge and switch, so the high-order path layer path of A, B, D and E is replaced by the path of A, C, D, B, D and E, which does not pass through the transmission medium layer path composed of A and B, so the LOS alarm of B will not influence the root alarm information of the path nodes in this high-order path layer. Similarly, the LOS alarm of B will not influence the root alarm information of the nodes in the low-order path layer path composed of A and E.

Secondly, all the alarms derived from transmission medium layer alarms in the high-order and low-order path layer paths are eliminated. All alarms are checked through again, the root alarm information of the transmission medium layer path node where the LOS alarm of B resides in is the LOS alarm of B *per se,* so the LOS alarm of B is a root alarm. Other near end alarms including VC-4-UNEQ alarm and TU-12-AIS alarms of E are not yet identified to be root alarm or non-root alarm, so further analysis of the high-order path layer alarms is necessary.

Afterwards, the high-order path layer alarm is to be analyzed. All the high-order path layer alarms are checked through, and at that time there is only one near end alarm existing in the high-order path layer, that is, the VC-4-UNEQ alarm of E. Because the VC-4-UNEQ alarm of E does not have the downstream nodes in the high-order path layer, the influence of the VC-4-UNEQ alarm of E on the low-order path layer paths passing through E can be analyzed directly, and thereby adding the VC-4-UNEQ alarm of E to the root alarm information list of nodes in the low-order path layer path of E.

Subsequently, all the alarms derived from the high-order layer alarms in the low-order path layer paths are eliminated. All alarms are checked through again: the root alarm information of the path node where the VC-4-UNEQ alarm of E resides in is the VC-4-UNEQ alarm of E *per se,* so the VC-4-UNEQ alarm of E is a root alarm. The TU-12-AIS alarms of E can be derived from the VC-4-UNEQ alarms of E in the root alarm lists of the nodes of the corresponding paths, so the TU-12-AIS alarms are not root alarms. Till now, all the near end alarms have been identified, so there is no need to analyze the low-order path layer alarms.

Finally, the root alarms of all the alarms are to be identified. The root alarm of every near alarm is to be checked first. The LOS alarm of B and the VC-4-UNEQ alarm of E are root alarms, and the TU-12-AIS alarms of E can be derived from the VC-4-UNEQ alarm of E in the root alarm information of the corresponding path node of TU-12-AIS alarm of E. So the root alarm of the TU-12-AIS alarm of E is the VC-4-UNEQ alarm of E. Then the root alarm of RDI alarm is to be checked. MS-RDI alarm of A can be derived from the LOS alarm of B in the root alarm information list of the path node in the transmission medium layer of B, and so the root alarm of the MS-RDI alarm of A is the LOS alarm of B. The root alarms of VC-4-RDI alarms of A, B, C and D and VC-12-RDI alarms of A can be derived from the VC-4-UNEQ alarms of E in the root alarm information list of the path node in the high-order path layer of E, and so their root alarm is the VC-4-UNEQ alarms of E. Till now, all the root alarms have been found, and the analysis is completed.

The method for analyzing the alarm relativity provided by the present invention can analyze all kinds of alarms in a synchronous optical transmission network, identify final root alarms and the corresponding mutual relation between the root alarms and the non-root alarms according to the propagation relation of upstream and downstream alarms in the paths and the mutual relationship between the service layer path and the client layer path, and have the high analyzing efficiency under the condition of large amount of alarms and network elements and the complication of traffic configuration. Thus, the method is powerful for the customs to locate the network failures quickly.

Although the method of the invention relating to analyzing the mutual relation of alarms in a synchronous optical transmission network has been described in detail in accordance with the preferred embodiments, it can be understood by those ordinary skilled in the art that variants and modifications can be made to the invention without departing from the spirit and the scope of the present invention. Therefore the foregoing constructed illustrative but not limitation embodiment and its variant equivalents are all fall in the fundamental principles or the scope of this invention.

### Industry Application

The method for analyzing mutual relation of alarms in a synchronous optical transmission network provided by the present invention can analyze all kinds of alarms in a synchronous optical transmission network, identify the final root alarms and the corresponding relation between the root alarms and the non-root alarms according to propagation relation of the upstream and downstream alarms in the path and the mutual relation between the service layer path and the client layer path, and have the high analyzing efficiency under the condition of large amount of alarms and network elements and the complication of traffic configuration. Meanwhile, the method can filtrate the condition that non-root alarms are not reported correctly, and ensure the analyzing accuracy, therefore it is powerful for the customers to locate the network failures quickly thereby.

## Claims

1. A method for analyzing mutual relation of alarms in a synchronous optical transmission network, wherein the method comprises steps of:
a) defining a list of root alarm information for each path node and initializing the list;
b) verifying if all near-end alarms in the network had been already identified as root alarm or non-root alarm, if so, going to step f, or going to next step;
c) analyzing all alarms of a transmission medium layer of the network, if there being near-end alarms not identified as root alarm or non-root alarm after analyzing, going to next step, or going to step f;
d) analyzing all alarms of a high-order path layer of the network, if there being near-end alarms not identified as root alarm or non-root alarm after analyzing, going to next step, or going to step f;
e) analyzing all alarms of a low-order path layer of the network; and
f) associating all alarms with their root alarms.

2. The method of claim 1, wherein the step of initializing the list comprises setting the list to be null.

3. The method of claim 1, wherein the step c of analyzing the alarms of the transmission medium layer further comprises steps of:
c1) analyzing the propagation relation of the alarms of the transmission medium layer along a path in the transmission medium layer to identify a alarm as a root alarm if the alarm could not be derived from another ones, or a non-root alarm if the alarm could be derived from another ones; and
c2) eliminating the alarms for path nodes in the high-order path layer and low-order path layer that are derived from the transmission medium layer alarms.

4. The method of claim 3, wherein the step c1 of analyzing the propagation relation of all alarms of the transmission medium layer along a path in the transmission medium layer further comprises steps of:
analyzing the next alarm if a alarm of the transmission medium layer is marked as a non-root alarm due to being derived from another ones;
adding a alarm to the lists of root alarm information for all the downstream nodes behind the path node where the detecting is conducted according to the transmission medium layer path information if the alarm is identified as a root alarm;
analyzing the influence that said alarm is applied to downstream nodes in the high-order path layer and low-order path layer and adding said alarm to the lists of root alarm information of the downstream nodes in the high-order path layer path and low-order path layer path passing through the path where the said alarm resides in; and
analyzing all alarms in turns till the alarms in the transmission medium layer have been marked completely.

5. The method of claim 3, wherein the step c2 of eliminating all alarms for path nodes in the high-order path layer and low-order path layer further comprises marking a alarm as a non-root alarm if the alarm in the high-order path layer or low-order path layer can be derived from any one in the list of root alarm information for the path node where the detecting is conducted.

6. The method of claim 1, wherein the step d further comprises steps of:
d1) analyzing the propagation relation of the alarms of the high-order path layer along a path in the high-order path layer; and
d2) eliminating the alarms for path nodes in the low-order path layer that are derived from that in the high-order path layer.

7. The method of claim 6, wherein the step d1 of analyzing the propagation relation of the alarms of the high-order path layer along a path in the high-order path layer further comprises steps of:
analyzing next alarm if a alarm in the high-order path layer is marked as a non-root alarm due to being derived from another ones;
adding a alarm to the lists of root alarm information for all the downstream nodes behind the path node where the detecting is conducted according to the high-order path layer path information if the alarm is marked as a root alarm;
analyzing the influence that said alarm is applied to downstream nodes in the low-order path layer and adding said alarm to the list of root alarm information for the downstream nodes of all the low-order path layer paths passing through the path where said alarm resides in; and
analyzing all alarms in turns till the alarms in high-order path layer have been marked completely.

8. The method of claim 6, wherein the step d2 of eliminating all alarms for path nodes in the low-order path layer also comprises marking a alarm as a non-root alarm if the alarm in the low-order path layer can be derived from any one in the list of root alarm information for the path node where the detecting is conducted.

9. The method of claim 1, wherein the step 5 further comprises steps of:
analyzing the next alarm if a alarm in the low-order path layer is identified as a non-root alarm due to being derived from another ones;
adding a alarm to the lists of root alarm information for all the downstream nodes behind the path node where the detecting is conducted according to the low-order path layer path information if the alarm is marked as a root alarm.

10. The method of claim 1, wherein the step of associating all alarms with their root alarms further comprises steps of:
- step 61 for checking each one of all near end alarms according to the analyzing results from step 1 to step 5, whether a root alarm in the root alarm information list of the path node at the detecting location of a near end alarm is said near end alarm *per se,* if yes, the root of said near end alarm is said near end alarm *per se,* i.e. said near end alarm is identified as a root alarm;
- step 62 for checking whether said near end alarm can be derived from some root alarms in the root alarm list of the path node at the detecting location, if yes, the root alarm of said near end alarm is identified to be the root alarm of the path node; and
- step 63 for checking whether said near end alarm can be derived from some root alarms in the root alarm list of the path node at the detecting location, if yes, the root alarm of the near end alarm is identified to be the root alarm of the path node.
